(19)

Europäisches Patentamt

European Patent Office

Office européen des brevets

(11) **EP 2 843 894 A1**

(12) **EUROPEAN PATENT APPLICATION**

(43) Date of publication:
04.03.2015 Bulletin 2015/10

(51) Int Cl.:
*H04L 27/26* (2006.01)

(21) Application number: 13182699.2

(22) Date of filing: 02.09.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Mestdagh, Denis Julien Gilles
38180 Seyssins (FR)**

(72) Inventor: **Mestdagh, Denis Julien Gilles
38180 Seyssins (FR)**

(74) Representative: **Hautier, Nicolas et al
Cabinet Hautier
20, rue de la Liberté
06000 Nice (FR)**

(54) **A method for generating a built symbol for PAPR reduction and a method for demodulating a received symbol**

(57)     The invention concerns a method for generating a built symbol for transmission comprising data of an original symbol of an orthogonal multi-carrier modulation signal in order to reduce the peak-to-average power ratio (PAPR) of the orthogonal multi-carrier modulation signal, the original symbol lasting for a duration $T_S$ and carried by N tones; the method comprising: partitioning the N tones into M tone sub-sets respectively comprising N/M tones; for each of the M tone sub-sets, generating by the intrinsic temporal-diversity property of Fast Fourier Transform a corresponding candidate sub-symbol set comprising M sub-symbols, each sub-symbol lasting for a duration Ts/M and carried by the N/M tones of the corresponding tone sub-sets; selecting from each of the M candidate sub-symbol sets a sub-symbol, wherein any two of the selected sub-symbols contain two different data; generating the built symbol for transmission comprising the M selected sub-symbols so that the built symbol contains all the data of the original symbol.

**Figure 1**

**Description**

TECHNICAL FIELD:

The present invention relates generally to a communication signal processing method and, more particularly, relates to a communication signal processing method capable of reducing a peak-to-average power ratio (PAPR) value of a signal.

BACKGROUND:

OFDM is nowadays a mainstream modulation choice for most modern broadband communication systems in use, wheither wireline or wireless. The main reason is that OFDM provides the best usage of the available frequency band since it maximizes the spectral efficiency. Moreover, one of other main advantages of OFDM over single carrier modulation is the easy mitigation of inter-symbol interference without having to resort to elaborate equalization, robustness in multipath wireless propagation channels, resilience to impulsive noise and narrowband ingress, and coexistence with legacy services because of spectral compactness and fine frequency granularity.

However, OFDM has a major drawback of having a large peak-to-average power ratio (PAPR). The large PAPR appears as a consequence of the nature of a multicarrier OFDM signal. Namely, when N modulated tones of the OFDM signal add together, the peak magnitude might have a value of N or even larger at a certain point in time if all tones add constructively, while the average might be quite low due to interferences between all modulated tones with independent amplitudes and phases.

The PAPR issue in OFDM systems can be simply understood by considering the example of an M-ary PSK modulation per tone. In this case, there are at most $M^2$ patterns amongst $M^N$ that yield the highest PAPR, namely, N.

PAPR values for N = 2, 4, 8, 16, 32, 64, 128, 256, 512, 1024, 2048 and QPSK modulation per tone is listed in the following Table 1. The PAPR value increases by 3dB per octave in the number of tones (i.e., each time we double the number of tones).

| N | 2 | 4 | 8 | 16 | 32 | 64 | 128 | 256 | 512 | 1024 | 2048 |
|---|---|---|---|----|----|----|-----|-----|-----|------|------|
| PAPR | 3dB | 6dB | 9dB | 12dB | 15dB | 18dB | 21dB | 24dB | 27dB | 30dB | 33dB |

Table 1: PAPR values for several typical values of N when a QPSK modulation is applied to each tone.

To prolong the battery life and save the system power, we need to seek to lower PAPR significantly. Every 3dB PAPR reduction doubles the amplifier efficiency.

A high PAPR impacts the implementation complexity and the power dissipation. Numerous approaches utilized to reduce the PAPR value have been proposed during the previous two to three decades and are still under thorough studies.

However, none of the known approaches provide a global solution concerning the desired (or mandatory) features and/or advantages listed here below:

•    Very high PAPR value and its complementary cumulative distribution function (CCDF(PAPR)) reduction capability,
•    Deterministic PAPR and CCDF(PAPR) reduction capability,
•    No iteration required at the transmitter nor at the receiver,
•    Low to very-low implementation complexity at both of the transmitter and the receiver,
•    No loss of capacity,
•    No Bit-Error-Rate (BER) degradation,
•    No need to increase the transmit power,
•    No need of transmitter to receiver side information,
•    No handshakes required between the transmitter and the receiver,
•    No Bandwidth expansion,
•    Neither in-band distortion nor out-of-band leakage,
•    Backward-compatible with a conventional-OFDM mode of operation.

Actually, there is a big need for a holistic approach by considering the sum of the analog and the digital transceiver's power consumption. Indeed, it would be useless to implement complex and heavy-computational-load PAPR reduction digital methods whose effects would lead to a situation where the contributions to the power consumption are changing fundamentally in a way that the digital signal processing becomes the dominant part of the overall consumption. While scaling of silicon-based processor efficiency with the help of Moore's law is approaching physical limits, the wireless communications need a new approach to significantly reduce the PAPR value while performing minimal low power signal processing computations. This is actually what the present invention is all about.

Reducing the PAPR value, and in the best case minimizing it, allows a power consumption reduction of the power amplifier and the digital-to-analog converter (DAC) when the average signal power must be kept fixed. On the other hand, higher average signal power can be transmitted for a fixed amplifier power supply $P_{DC}$ and thus improving the overall signal-to-noise ratio (SNR), and consequently the BER at the receiver, allowing a larger wireless coverage from the base stations.

SUMMARY:

The invention concerns a method for generating a built symbol for transmission comprising data of an original symbol of an orthogonal multi-carrier modulation signal in order to reduce the peak-to-average power ratio (PAPR) of the orthogonal multicarrier modulation signal, the original symbol lasting for a duration TS and carried by N tones; the method comprising: partitioning the N tones into M tone sub-sets respectively comprising N/M tones; for each of the M tone sub-sets, generating by the intrinsic temporal-diversity property of Fast Fourier Transform a corresponding candidate sub-symbol set comprising M sub-symbols, each sub-symbol lasting for a duration TS/M and carried by the N/M tones of the corresponding tone sub-sets; selecting from each of the M candidate sub-symbol sets a sub-symbol, wherein any two of the selected sub-symbols contain two different data; generating the built symbol for transmission comprising the M selected sub-symbols so that the built symbol contains all the data of the original symbol.

The invention also concerns a method for generating a built symbol for transmission comprising data of an original symbol of a multi-carrier modulation signal in order to reduce the peak-to-average power ratio (PAPR) of the multi-carrier modulation signal, the original symbol lasting for a duration TS and carried by N tones; the method comprising partitioning the N tones into M tone sub-sets respectively comprising N/M tones; for each of the M tone sub-sets, generating a corresponding candidate sub-symbol set comprising M sub-symbols by partitioning the data contained in the original symbol into M data portions P1, P2... to PM respectively contained in one of the M sub-symbols lasting for a duration TS/M and carried by the N/M tones of the corresponding tone sub-sets; selecting from each of the M candidate sub-symbol sets a sub-symbol containing one of the M data portions P1, P2... to PM, wherein any two of the selected symbols contain two different data portions; generating a built symbol for transmission comprising the M selected sub-symbols so that the built symbol contains all the data of the original symbol.

The M selected sub-symbols are preferably time-multiplexed without guard interval between any two adjacent sub-symbols of the M selected sub-symbols of the built symbol for transmission.

The invention concerns also a symbol, and a symbol obtained by performing the above-mentioned method for generating a built symbol.

The invention concerns a transmitter configured to perform the above-mentioned method for generating a built symbol, and a receiver configured to perform a method for demodulating the built symbol generated by said method for generating a built symbol.

Since each of the time-multiplexed sub-symbols contains only N/M data-modulated tones, the PAPR of the built symbol is divided by the deterministic factor M. Moreover, since the built symbol utililises all of the N tones of the original symbol, and the built symbol lasts also for the duration $T_S$ of the original symbol, there is thus no loss of capacity nor BER degradation.

The invention is preferably applied to process a time-multiplexed multi-carrier modulation signal, such as an OFDM signal.

In one example of embodiment according to the invention, the built symbol is demodulated by a receiver which performs inverse digital temporal-diversity operations that are already performed by the transmitter, in order to reconstruct, with pre-determined complex-number arithmetic operations, the time-domain samples. Therefore, the N samples of the built symbol are equal to the N samples of the original symbol at the same rate. Furthermore, in this case, a conventional OFDM receiver can be utilized for demodulating the built symbol.

In addition to the above-mentioned method of demodulation, in one example of embodiment, another method for demodulating a built symbol generated by performing the above-mentioned method for generating a built symbol is disclosed, comprising: demodulating each time one of M selected sub-symbols of the built symbol.

Compared with a conventional OFDM system, such receiver allows to transmit and receive high throughput built symbols in very high Doppler spread channels.

The invention keeps all the advantages of a conventional OFDM system, with additional advantages of a significant reduction of the PAPR and its complementary cumulative distribution function (CCDF) with insignificant additional arithmetic computations. Moreover, as a result of PAPR reduction, the invention allows a significant simplification of the analogue functional part of the transmitter (e.g., very significant reduction of an Input-Back-Off (IBO) of a power amplifier of the transmitter, a reduced number of resolution bits and/or a reduced dynamic range of the DAC), resulting in a very low power consumption as well as a very low implementation complexity. The invention proposes thus a very low-cost and a very low-power OFDM solution.

BRIEF DESCRIPTION OF THE DRAWINGS:

The foregoing and other aspects of the embodiments of the present invention are made more evident in the following Detailed Description, when read in conjunction with the attached Figures, wherein:

Figure 1 illustrates the generation of two possible built symbols according to an embodiment of the present invention.
Figures 2(a) to 2(d) illustrate four different candidate sub-symbols sets respectively carried by four different tone sub-sets according to an embodiment of the present invention.
Figures 3(a) to 3(c) illustrate three possible built symbols according to an embodiment of the present invention.
Figure 4 illustrates computed samples of a line-of-sight and a non line-of-sight simultaneously received built symbols with a zero-padding (ZP) guard interval in a general case in which there are M = $2^p$ tone sub-sets according to an embodiment of the present invention.
Figures 5(a) and 5(b) respectively illustrate an example of the transmitter and the receiver according to an embodiment of the present invention.
Figure 6 illustrates an ICI noise from a sub-symbol to the jth tone of the tone sub-set utilized by the following adjacent sub-symbol according to an embodiment of the present invention.
Figure 7 illustrates a demodulation process for the first two sections of the built symbol (for large Doppler spread channels) according to an embodiment of the present invention.
Figure 8 illustrates a (M-1) times loop-back receiver architecture in high Doppler spread channels using a single

$$\frac{N}{M} - FFT$$ according to an embodiment of the present invention.

Figure 9 illustrates a receiver macroblock architecture comprising a optional Doppler-compensation macroblock with the loop-back configuration according to an embodiment of the invention.
Figure 10 presents a comparison of the above-mentioned REC, RC, BTRC, SP, and ISP spectrum according to an embodiment of the invention.

DETAILED DESCRIPTION:

The invention provides a method for rebuilding at least one symbol of a multi-carrier modulation signal for data transmission in order to reduce a peak-to-average power ratio (PAPR) of the multi-carrier modulation signal. Some advantageous features and steps will be described below. Then some exemplary embodiments and use cases will be further detailed in regard with the drawings.

Before beginning a detailed review of embodiments of the present invention, the optional features listed below can be all or partially utilized to solve at least partially the previously mentioned technical problem:

- the original symbol and the M selected sub-symbols are time-multiplexed;
- the built symbol is prepended with a zero-padded guard interval lasting at least the maximum delay spread of a multipath propagation channel;
- the orthogonal multi-carrier modulation signal is an orthogonal frequency-division multiplexing (OFDM) signal;
- there are M! permutations during the step of selecting from the M candidate sub-symbol sets a sub-symbol;
- the built symbol is demodulated by a conventional orthogonal multi-carrier receiver by performing an inverse of transmitter's temporal-diversity arithmetic processing applied to symbol samples of the built symbol received by a receiver to regenerate samples identical to symbol samples generated by the conventional orthogonal multi-carrier receiver;
- demodulating each time one of M selected sub-symbols of the built symbol;
- the built symbol is demodulated sub-symbol by sub-symbol,
- an inter carrier interference (ICI) cancellation stage utilized for removing an ICI noise between any two adjacent sub-symbols of the built symbol, the two adjacent sub-symbols respectively carried by two distinct tone sub-sets TS-A and TS-B comprising respectively N/M tones; the ICI cancellation stage comprising: calculating a sum of amplitudes of the tone sub-set TS-B (main lobes and side lobes) that overlap a tone of the tone sub-set TS-A; generating a result by subtract said sum that is the ICI noise on the said tone of the tone sub-set TS-A;

- the result is calculated offline and stored in a memory before demodulating;
- the M sub-symbols of the built symbol are demodulated sub-symbol by sub-symbol chronologically or in parallel;
- performing a pulse shaping process on each of the M sub-symbol of the built symbol in order to reduce computations occurred while performing the ICI cancellation stage.

Briefly speaking, the method according to the invention is utilised for processing an original symbol of a multi-carrier modulation signal carried by N tones for data transmission in order to generate a built symbol to be transmitted by a transmitter to a receiver; the built symbol comprising M sub-symbols respectively lasting for a duration $T_S/M$, respectively selected from M disjoint tone sub-sets and carried by N/M tones, wherein $T_S$ is the duration of the original symbol, $M = 2^p$, p is a positive integer, and N is a multiple of M.

The PAPR value during the transmission of the built symbol is thus reduced since now only N/M tones, instead of N tones, are added together.

The detailed steps of the invention will be decribed in the following paragraphs.

The method of the present invention is utilised for processing a multi-carrier modulation signal which is time-multiplexed, for example an orthogonal frequency-division multiplexing (OFDM) signal comprising at least an original OFDM symbol as described in the following embodiments. However, the method of the invention can be performed, without departing from the scope of the present invention, to process other types of time-multiplexed multi-carrier modulation signals such as a discrete multi-tone (DMT) signal.

Before providing a first embodiment of the invention of generating a built symbol comprising 2 sub-symbols (sections) carried by N/2 tones, a detailed derivation explaining the reasons to perform the steps of the method will be provided as below for the ease of the comprehension of the invention.

The following $x_k(n)$ of Eq.(1) represents time-domain samples of an original OFDM signal generated at the transmitter and carried by a $k^{th}$ modulated tone:

$$x_k(n) = \frac{1}{\sqrt{N}} . X(k). exp\left\{j\frac{2\pi}{N}k.n\right\} \quad (1)$$

In a preferred embodiement, the transmitter is a complex N-point IFFT (Inverse Fast Fourier Transform) transmitter. The transmitter generates an OFDM symbol comprising time samples x(n) that are a summation of the N tones (i.e. QAM (Quadrature Amplitude Modulation)-modulated tones), so that:

$$x(n) = \sum_{k=0}^{N-1} x_k(n) \quad (2)$$

The N tones can be divided into two distinct tone sub-sets, one of the tone sub-sets comprises only even tones and represented as the tone sub-set of even tones $\{k_{\#0}\} = 2m$, and the other tone sub-set comprises only odd tones and represented as the tone sub-set of odd tones $\{k_{\#1}\} = 2m + 1$, wherein $m \in N^+$ (m = 0, 1, 2,...).

Eq.(2) can be thus expressed by a summation of contributions from the tone sub-set of even tones $\{k_{\#0}\}$ and the tone sub-set of odd tones $\{k_{\#1}\}$:

$$x(n) = \sum_{k\in\{k_{\#0}\}} x_k(n) + \sum_{k\in\{k_{\#1}\}} x_k(n) = x_{\{k_{\#0}\}}(n) + x_{\{k_{\#1}\}}(n) \quad (3)$$

For each even tone $\in \{k_{\#0}\}$, we have for $n' = 0, 1, ... \left(\frac{N}{2} - 1\right)$:

$$x_{\{k_{\#0}\}}(n') = \frac{1}{\sqrt{N}} X\left(k_{\{k_{\#0}\}}\right). exp\left\{j\frac{2\pi}{N}n'k_{\{k_{\#0}\}}\right\} \quad (4)$$

and

$$x_{\{k_{\#0}\}}\left(\frac{N}{2}+n'\right) = \frac{1}{\sqrt{N}}X\big(k_{\{k_{\#0}\}}\big).exp\left\{j\frac{2\pi}{N}\left(\frac{N}{2}+n'\right)k_{\{k_{\#0}\}}\right\}$$

$$= \frac{1}{\sqrt{N}}X\big(k_{\{k_{\#0}\}}\big).exp\left\{j\frac{2\pi}{m}n'k_{\{k_{\#0}\}}\right\}.exp\{j\pi k_{\{k_{\#0}\}}\}$$

$$= \frac{1}{\sqrt{N}}X\big(k_{\{k_{\#0}\}}\big).exp\left\{j\frac{2\pi}{N}n'k_{\{k_{\#0}\}}\right\}.exp\{j2m\pi\} = x_{\{k_{\#0}\}}(n') \qquad (5)$$

Therefore, the contribution from all of the even tones yields a periodic time sample sequence of period $N/2$ verifying:

$$x_{\{k_{\#0}\}}\left(\frac{N}{2}+n'\right) = x_{\{k_{\#0}\}}(n') \quad \text{for all } n' = 0,1,\dots,\left(\frac{N}{2}-1\right) \qquad (6)$$

For each odd tone $\in \{k_{\#1}\}$, we have :

$$x_{\{k_{\#1}\}}(n') = \frac{1}{\sqrt{N}}X\big(k_{\{k_{\#1}\}}\big).exp\left\{j\frac{2\pi}{N}n'k_{\{k_{\#1}\}}\right\} \qquad (7)$$

and

$$x_{\{k_{\#1}\}}\left(\frac{N}{2}+n'\right) = \frac{1}{\sqrt{N}}X\big(k_{\{k_{\#1}\}}\big).exp\left\{j\frac{2\pi}{N}\left(\frac{N}{2}+n'\right)k_{\{k_{\#1}\}}\right\}$$

$$= \frac{1}{\sqrt{N}}X\big(k_{\{k_{\#1}\}}\big).exp\left\{j\frac{2\pi}{m}n'k_{\{k_{\#1}\}}\right\}.exp\{j\pi k_{\{k_{\#1}\}}\}$$

$$= \frac{1}{\sqrt{N}}X\big(k_{\{k_{\#1}\}}\big).exp\left\{j\frac{2\pi}{N}n'k_{\{k_{\#1}\}}\right\}.exp\{j\pi(2m+1)\} = -x_{\{k_{\#1}\}}(n')$$

$$(8)$$

Thus, the contribution from all of the odd tones yields an anti-periodic time sample sequence verifying:

$$x_{\{k_{\#1}\}}\left(\frac{N}{2}+n'\right) = -x_{\{k_{\#1}\}}(n') \quad \text{for } n' = 0,1,\dots,\left(\frac{N}{2}-1\right) \qquad (9)$$

Due to the temporal-diversity properties of the original OFDM symbol and the above-mentioned calculation, the Eq.(6) and Eq.(9) reveal that the above-mentioned time-multiplexed sections (sub-symbols) $x_{\{k_{\#0}\}}(n')$ and $x_{\{k_{\#1}\}}(n')$ carry the same data information than the above-mentioned time-multiplexed sections $x_{\{k_{\#0}\}}\left(\frac{N}{2}+n'\right)$ and $x_{\{k_{\#1}\}}\left(\frac{N}{2}+n'\right)$, respectively.

Therefore, instead of transmitting the original OFDM symbol given by Eq.(2), we can transmit a built symbol formed by the time-multiplexed section $x_{\{k_{\#0}\}}(n')$ followed by the time-multiplexed section $x_{\{k_{\#1}\}}\left(\frac{N}{2}+n'\right)$ without any loss of capacity. The built symbol can be formed in another way by permuting the ordering of the multiplexed sections; that means the built symbol can be formed by the time-multiplexed section $x_{\{k_{\#1}\}}(n')$ followed by the time-multiplexed section $x_{\{k_{\#0}\}}\left(\frac{N}{2}+n'\right)$.

For the ease of the comprehension of the following description, a notation $s_{\{k_{\#q}\}}(n')$ (q = 0,1,..., M - 1) is utilised for representing a time-multiplexed section (sub-symbol) carried either by a tone sub-set of even tones (q = 0) or by a tone sub-set of odd tones (q = 1); the section $s_{\{k_{\#q}\}}(n')$ contains a portion of time samples of the built symbol chosen for transmission.

The temporal-diversity properties of the OFDM signals provide a very simple means to generate the built symbol from the output samples of the N-point IFFT transmitter. Indeed, according to Eq.(2), the N outputs of the N-point IFFT transmitter are given by:

$$x(n') + x\left(\frac{N}{2} + n'\right)$$
$$= \left[x_{\{k_{\#0}\}}(n') + x_{\{k_{\#1}\}}(n')\right] + \left[x_{\{k_{\#0}\}}\left(\frac{N}{2} + n'\right) + x_{\{k_{\#1}\}}\left(\frac{N}{2} + n'\right)\right] \quad (10)$$

Then, using Eq.(6) and Eq.(9) into Eq.(10), we obtain :

$$s_{\{k_{\#0}\}}(n') = \frac{1}{2}\left(x(n') + x(\frac{N}{2} + n')\right) \qquad (11.1)$$

$$s_{\{k_{\#0}\}}\left(\frac{N}{2} + n'\right) = \frac{1}{2}\left(x(n') + x\left(\frac{N}{2} + n'\right)\right) \qquad (11.2)$$

$$s_{\{k_{\#1}\}}(n') = \frac{1}{2}\left(x(n') - x(\frac{N}{2} + n')\right) \qquad (11.3)$$

$$s_{\{k_{\#1}\}}\left(\frac{N}{2} + n'\right) = -\frac{1}{2}\left(x(n') - x\left(\frac{N}{2} + n'\right)\right) \qquad (11.4)$$

from which the above-mentioned two possible combinations of two time-multiplexed sections (OFDM sub-symbols) for the built symbol are obtained, as the built symbol #1 in Eq.(12.1) and the built symbol #2 Eq.(12.2). The built symbol comprising N samples carrying the same data information at the same rate as the original OFDM symbol.

$$\text{built symbol \#1: } s_{\{k_{\#0}\}}(n') + s_{\{k_{\#1}\}}\left(\frac{N}{2} + n'\right) \qquad (12.1)$$

$$\text{built symbol \#2: } s_{\{k_{\#1}\}}(n') + s_{\{k_{\#0}\}}\left(\frac{N}{2} + n'\right) \qquad (12.2)$$

with $n' = 0, 1, \dots, \left(\frac{N}{2} - 1\right)$.

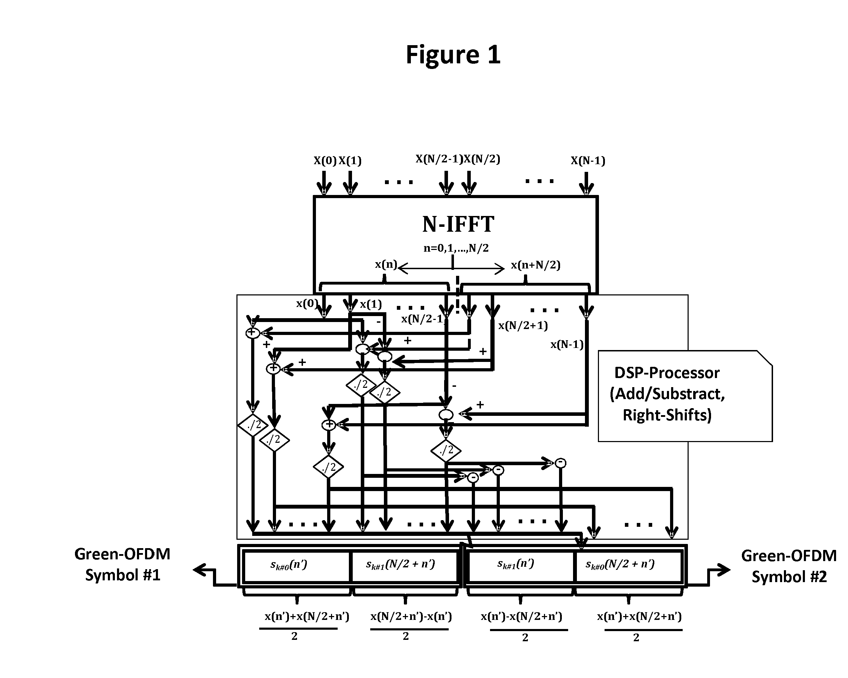

It should be noted that Eqs.(11) require only elementary arithmetic operations, such as add/subtract, sign-reversal and division by a factor 2 (i.e., right-shift of binary words that code the samples of the original OFDM symbol), as shown in Figure 1. Figure 1 illustrates the generation of the two above-mentioned possible built symbols #1 and #2 according to an embodiment of the present invention.

The PAPR of the built symbol, no matter the built symbol #1 or the built symbol #2 is chosen to be transmitted instead of transmitting the original OFDM symbol, is reduced by 3dB as compared with the PAPR of the original OFDM symbol because both of the two OFDM sub-symbols of the built symbol are time-multiplexed and carried by only N/2 modulated tones.

In a preferred embodiment, before being treated by an OFDM complex N-point FFT demodulator, the built symbol is first received and treated by the receiver which applies the inverse of a DSP process performed by the transmitter. Indeed, it is assumed first a back-to-back transmitter/receiver configuration. If the built symbol #1 is chosen for transmission, we have N output samples from an analogue-to-digital converter(s) (ADCs) of the receiver given by:

$$r_{\{k_{\#0}\}}(n') + r_{\{k_{\#1}\}}\left(\frac{N}{2} + n'\right) = s_{\{k_{\#0}\}}(n') + s_{\{k_{\#1}\}}\left(\frac{N}{2} + n'\right) \qquad (13)$$

Using Eq.(11.1) and Eq. (11.4), the N received samples from the output of the ADC(s) given by Eq. (12) are processed to provide:

$$x(n') = r_{\{k_{\#0}\}}(n') - r_{\{k_{\#1}\}}\left(\frac{N}{2} + n'\right) \qquad (14.1)$$

$$x\left(\frac{N}{2} + n'\right) = r_{\{k_{\#0}\}}(n') + r_{\{k_{\#1}\}}\left(\frac{N}{2} + n'\right) \qquad (14.2)$$

If the built symbol #2 is chosen to be transmitted instead of the built symbol #1, we have:

$$x(n') = r_{\{k_{\#1}\}}(n') + r_{\{k_{\#0}\}}\left(\frac{N}{2} + n'\right) \qquad (14.3)$$

$$x\left(\frac{N}{2} + n'\right) = r_{\{k_{\#0}\}}\left(\frac{N}{2} + n'\right) - r_{\{k_{\#1}\}}(n') \qquad (14.4)$$

Therefore, with this simple linear combination of the receiver's ADC(s) output time samples, we obtain a time-domain symbol which is fully compatible with existing OFDM demodulators.
The temporal-diversity properties of OFDM signals are not limited to the value of M = 2. A second embodiment of the present invention wherein M = 4 will be provided in the following paragraphs.
In the second embodiment, the N tones of the original OFDM symbol will be divided into four (M = 4) disjoint sub-sets. For example, the even tones of the N tones can be further divided into two disjoint tone sub-sets of even tones, such as:

$$\text{Sub-set \#0:} \quad \{k_{\#0}\} = 4m \qquad (15.1)$$

$$\text{Sub-set \#2:} \quad \{k_{\#2}\} = 4m + 2 \qquad (15.2)$$

Similarly, the odd tones of the N tones can be divided into two disjoint tone sub-sets of odd tones, such as:

$$\text{Sub-set \#1:} \quad \{k_{\#1}\} = 4m + 1 \qquad (15.3)$$

$$\text{Sub-set \#3:} \quad \{k_{\#3}\} = 4m + 3 \qquad (15.4)$$

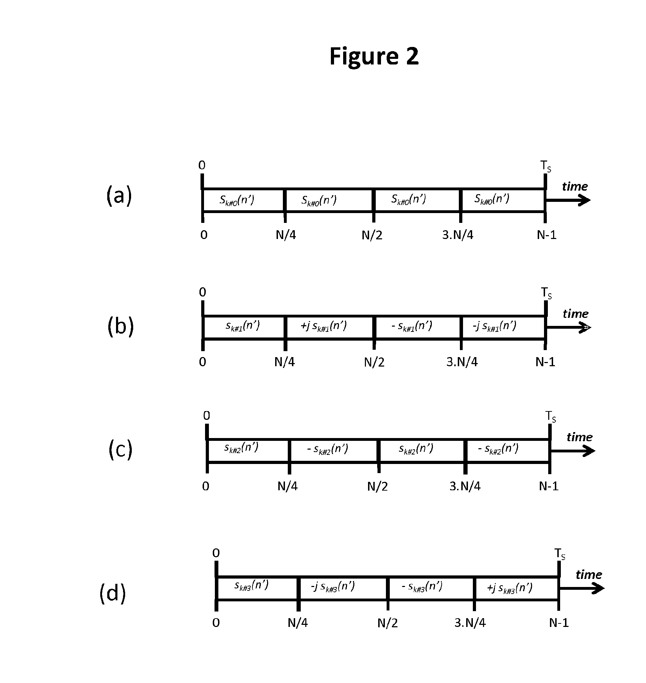

wherein $m \in \mathbb{N}^+$ (m = 0,1,2, ...)
The built symbol comprising four time-multiplexed sections can be later generated, and each of the time-multiplexed sections lasts for a duration $T_S/4$ ($T_s$ = the duration of the built symbol = the duration of the original OFDM symbol). Since each section of the built symbol contains only N/4 tones, the PAPR of the built symbol of the second embodiment is further decreased by 3dB as compared with the built symbol of the first embodiment described previously. Compared with the original OFDM symbol that doesn't apply any PAPR reduction method, the tone partitioning expressed by Eqs.(15) leads to a PAPR reduction by 6dB.
The temporal-diversity properties are used to generate the built symbol with the tone partitioning given by Eqs.(15). Using Eq.(1) with the four tone sub-sets defined by Eqs.(15), we have four candidate sub-symbols sets (a) to (d) respectively illustrated in the following Eqs.(16.a) to (16.d) and Figures 2(a) to 2(d):

(a) a first candidate sub-symbols (sections) set comprising the following four candidate sub-symbol carried by an even-tone subset $\{k_{\#0}\}$, $n' = 0,1, \ldots, \left(\frac{N}{4} - 1\right)$ :

$$
\begin{aligned}
s_{\{k_{\#0}\}}(n') &= x_{\{k_{\#0}\}}(n') \\
s_{\{k_{\#0}\}}\left(\frac{N}{4} + n'\right) &= x_{\{k_{\#0}\}}(n') = s_{\{k_{\#0}\}}(n') \\
s_{\{k_{\#0}\}}\left(\frac{N}{2} + n'\right) &= x_{\{k_{\#0}\}}(n') = s_{\{k_{\#0}\}}(n') \\
s_{\{k_{\#0}\}}\left(\frac{3N}{4} + n'\right) &= x_{\{k_{\#0}\}}(n') = s_{\{k_{\#0}\}}(n')
\end{aligned}
\qquad (16.a)
$$

(b) a third candidate sub-symbols set carried by an even-tone subset $\{k_{\#2}\}$,
$n' = 0,1, \ldots, \left(\frac{N}{4} - 1\right)$ :

$$
\begin{aligned}
s_{\{k_{\#2}\}}(n') &= x_{\{k_{\#2}\}}(n') \\
s_{\{k_{\#2}\}}\left(\frac{N}{4} + n'\right) &= - x_{\{k_{\#2}\}}(n') = - s_{\{k_{\#2}\}}(n') \\
s_{\{k_{\#2}\}}\left(\frac{N}{2} + n'\right) &= x_{\{k_{\#2}\}}(n') = s_{\{k_{\#2}\}}(n') \\
s_{\{k_{\#2}\}}\left(\frac{3N}{4} + n'\right) &= - x_{\{k_{\#2}\}}(n') = - s_{\{k_{\#2}\}}(n')
\end{aligned}
\qquad (16.b)
$$

(c) a second candidate sub-symbols set carried by an odd-tone subset $\{k_{\#1}\}$,
$n' = 0,1, \ldots, \left(\frac{N}{4} - 1\right)$ :

$$
\begin{aligned}
s_{\{k_{\#1}\}}(n') &= x_{\{k_{\#1}\}}(n') \\
s_{\{k_{\#1}\}}\left(\frac{N}{4} + n'\right) &= +j\, x_{\{k_{\#1}\}}(n') = +j\, s_{\{k_{\#1}\}}(n') \\
s_{\{k_{\#1}\}}\left(\frac{N}{2} + n'\right) &= - x_{\{k_{\#1}\}}(n') = - s_{\{k_{\#1}\}}(n') \\
s_{\{k_{\#1}\}}\left(\frac{3N}{4} + n'\right) &= -j\, x_{\{k_{\#1}\}}(n') = -j\, s_{\{k_{\#1}\}}(n')
\end{aligned}
\qquad (16.c)
$$

(d) a fourth candidate sub-symbols set carried by an odd-tone subset $\{k_{\#3}\}$, $n' = 0,1, \ldots, \left(\frac{N}{4} - 1\right)$ :

$$
\begin{aligned}
s_{\{k_{\#3}\}}(n') &= x_{\{k_{\#3}\}}(n') \\
s_{\{k_{\#3}\}}\left(\frac{N}{4} + n'\right) &= -j\, x_{\{k_{\#3}\}}(n') = -j\, s_{\{k_{\#3}\}}(n') \\
s_{\{k_{\#3}\}}\left(\frac{N}{2} + n'\right) &= - x_{\{k_{\#3}\}}(n') = - s_{\{k_{\#3}\}}(n') \\
s_{\{k_{\#3}\}}\left(\frac{3N}{4} + n'\right) &= +j\, x_{\{k_{\#3}\}}(n') = +j\, s_{\{k_{\#3}\}}(n')
\end{aligned}
\qquad (16.d)
$$

Using a single N-point complex IFFT, we obtain a time-domain signal equal to the sum of Eqs.(16), i.e. [(16. a) + (16. b) + (16. c) + (16. d)] $n' = 0, 1, \ldots, \frac{N}{4} - 1$. The outputs of the complex N-point IFFT transmitter are thus given by:

$$
x(n') = s_{\{k_{\#0}\}}(n') + s_{\{k_{\#1}\}}(n') + s_{\{k_{\#2}\}}(n') + s_{\{k_{\#3}\}}(n') \qquad (17.a)
$$

$$
x\left(\frac{N}{4} + n'\right) = s_{\{k_{\#0}\}}(n') + j\, s_{\{k_{\#1}\}}(n') - s_{\{k_{\#2}\}}(n') - j\, s_{\{k_{\#3}\}}(n') \qquad (17.b)
$$

$$x\left(2\frac{N}{4}+n'\right) = s_{\{k_{\#0}\}}(n') - s_{\{k_{\#1}\}}(n') + s_{\{k_{\#2}\}}(n') - s_{\{k_{\#3}\}}(n') \qquad (17.c)$$

$$x\left(3\frac{N}{4}+n'\right) = s_{\{k_{\#0}\}}(n') - js_{\{k_{\#1}\}}(n') - s_{\{k_{\#2}\}}(n') + js_{\{k_{\#3}\}}(n') \qquad (17.d)$$

$s_{\{k_{\#0}\}}(n')$ is obtained by performing an addition of Eqs.(17) :

$$s_{\{k_{\#0}\}}(n') = \left[x(n') + x\left(\frac{N}{4}+n'\right) + x\left(2\frac{N}{4}+n'\right) + x\left(3\frac{N}{4}+n'\right)\right] \qquad (18)$$

Then, Eqs.(16) and Eqs.(17) provide:

$$x'\left(\frac{N}{4}+n'\right) = x\left(\frac{N}{4}+n'\right) - s_{\{k_{\#0}\}}(n') = js_{\{k_{\#1}\}}(n') - s_{\{k_{\#2}\}}(n') - js_{\{k_{\#3}\}}(n') \qquad (19.a)$$

$$x'\left(2\frac{N}{4}+n'\right) = x\left(2\frac{N}{4}+n'\right) - s_{\{k_{\#0}\}}(n') = -s_{\{k_{\#1}\}}(n') + s_{\{k_{\#2}\}}(n') - s_{\{k_{\#3}\}}(n') \qquad (19.b)$$

$$x'\left(3\frac{N}{4}+n'\right) = x\left(3\frac{N}{4}+n'\right) - s_{\{k_{\#0}\}}(n') = -js_{\{k_{\#1}\}}(n') - s_{\{k_{\#2}\}}(n') + js_{\{k_{\#3}\}}(n') \qquad (19.c)$$

The above Eqs.(19) can also be expressed in a matrix form ($u$ = 1,2,3 is the row indice, and $q$ = 1,2,3 is the column indice):

$$\left[x'\left(u\frac{N}{4}+n'\right)\right] = \mathbb{T}(u,q).\left[s_{\{k_{\#q}\}}(n')\right] \qquad (20)$$

wherein

$$\mathbb{T}(u,q) = \begin{bmatrix} j & -1 & -j \\ -1 & 1 & -1 \\ -j & -1 & j \end{bmatrix} \qquad (21)$$

T(u,q) is an invertible matrix since det(T(u, q)) = ‖T(u,q)‖ = -4j ≠ 0. We can thus compute any of the four time-multiplexed sections using Eq.(18) for $s_{\{k_{\#0}\}}$(n') and the following Eq.(22) for $s_{\{k_{\#1}\}}$(n'), $s_{\{k_{\#2}\}}$(n') and $s_{\{k_{\#3}\}}$(n'), with u, q = 1, 2, 3 :

$$\left[s_{\{k_{\#q}\}}(n')\right] = \mathbb{T}^{-1}(u,q).\left[x'\left(u\frac{N}{4}+n'\right)\right] \qquad (22)$$

Eq.(22) and Eqs.(16) provide the candidate sub-symbols to be selected to generate the built symbol with a reduced PAPR for transmission.
In order to generate the built symbol, one sub-symbol from each of the 4 candidate sub-symbol sets is selected. Each selected sub-symbol lasts for a duration $T_S/4$ and carried by the N/M tones of the corresponding tone sub-set.
All of the four candidate sub-symbol sets participate the composition of the built symbol, and there is no candidate sub-symbol set providing more than one sub-symbol for generating the built symbol. In addition, each of the four selected sub-symbols has a different value of $u$ since the four selected sub-symbols contain respectively disjoint portions of the data contained in the original OFDM symbol.
As a reminder, the data contained in the original OFDM symbol can be partitioned into four different portions by performing the method of the invention because the original OFDM symbol is time-multiplexed. Thus, the value "*u*" of each selected sub-symbols indicates its corresponding time-domain portion of the data contained in the original OFDM symbol.

Hence, there are 4! = 24 different combinations of time-multiplexed sections (OFDM sub-symbols) to form the built symbol for transmission, which can be expressed as:

$$[s(\tau)] = \mathbb{P}.\begin{bmatrix} S_{\{k_{\#0}\}}(n') \\ S_{\{k_{\#q}\}}(n') \end{bmatrix} \quad (23)$$

where $\tau$ = 0,1, ..., (N - 1), and P is a (4 x 4) "Permutation" matrix that defines four selected time-multiplexed sections of the built symbol for transmission. Each row and each column of the matrix P contains only one coefficient ($\pm 1$ or $\pm j$).

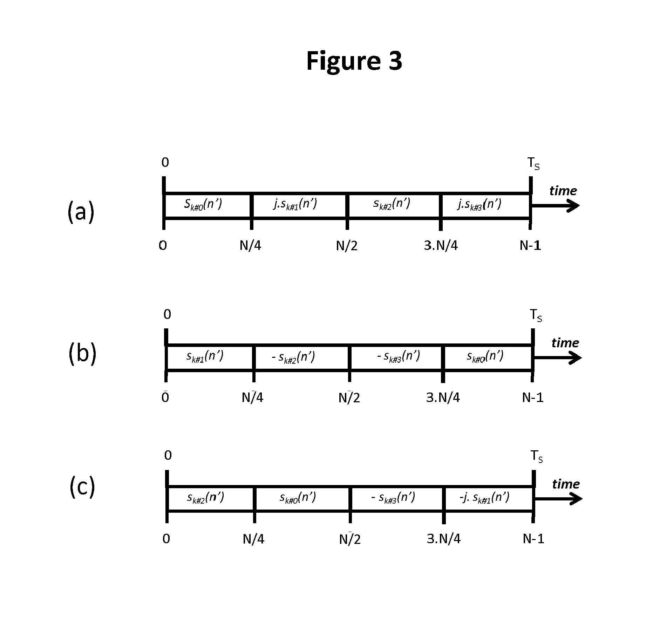

3 of the 24 possible built symbols for transmission are provided as three examples (e) to (g) with a matrix expression as below and also respectively illustrated in Figures 3(a) to 3(c).

$$(e)\ \mathbb{P} = \begin{bmatrix} 1 & 0 & 0 & 0 \\ 0 & j & 0 & 0 \\ 0 & 0 & 1 & 0 \\ 0 & 0 & 0 & j \end{bmatrix} \quad (f)\ \mathbb{P} = \begin{bmatrix} 0 & 1 & 0 & 0 \\ 0 & 0 & -1 & 0 \\ 0 & 0 & 0 & -1 \\ 1 & 0 & 0 & 0 \end{bmatrix} \quad (g)\ \mathbb{P} = \begin{bmatrix} 0 & 0 & 1 & 0 \\ 1 & 0 & 0 & 0 \\ 0 & 0 & 0 & -1 \\ 0 & -j & 0 & 0 \end{bmatrix}$$

It should be noted that $T^{-1}(u, q)$ is preferablly not computed dynamically in real time. Indeed, by system specifications we have the knowledge of required parameters to compute off-line $T^{-1}(u,q)$ and then stored the obtained results in a memory (i.e. a nonvolatile memory (ROM)) within a transceiver circuitry. It is also noteworthy that there is no need of side information to be transmitted about a chosen permutation matrix P at the transmitter because the matrix P can also be able to be specified within the system specifications.

Therefore, $s_{\{k_{\#q}\}}(n')\forall q$ are obtained by simple additional arithmetic computations requiring merely adds/substracts, division by a factor 2 (right-shift of binary words) and multiplies/divides by a positive integer number and a complex coefficient "*j*". The above-mentioned additional arithmetic computations can be easily implemented by software using a very low-power and a very low-cost DSP processor core on top of a conventional OFDM transmitter. Furthermore, compared with the computations performed by a conventional OFDM system without applying the method of the present invention to reduce the PAPR, the additional computations are negligible while maintaining the transmission throughput.

The above-mentioned additional arithmetic computations performed by the transmitter can also be applied to the built symbol for transmission through multipath propagation channels, provided that a guard interval is prepended to each built symbol generated by the execution of the method of the invention. This allows to absorb an inter-symbol interference (ISI) noise. With a maximum L-multipath delay spread $\Delta_{max}$, the duration GID of the guard interval must verify:

$$GID \geq \Delta_{max} \quad (24)$$

At the receiver, the inverse of the transmitter's DSP operations will be performed at the output of the ADC(s) to reconstruct the N time-domain OFDM samples contained in the built symbol which are further processed by the receiver (demodulation and decoding).

In a preferred embodiment, the method comprises further a step of prepending a zero-padded guard interval to the built symbol so that after receiving the built symbol, the receiver can generate samples identical to the samples generated by the ADC(s) of a conventional OFDM receiver after the conventional OFDM receiver receives and processes the original OFDM symbol.

More precisely, a re-ordering of the samples of the received sub-symbols of the built symbol is first performed. The N samples of the original OFDM symbol are then be able to be reconstructed using Eqs.(17).

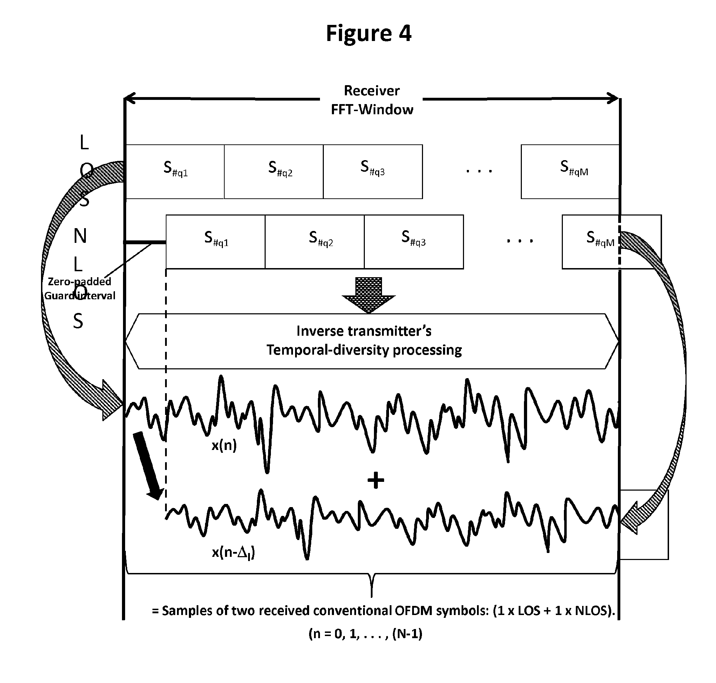

In order to reconstruct the N samples of the original OFDM symbol when the built symbol has propagated through an L-multipath channel, the guard interval can be zero-padded (ZP). As illustrated in Figure 4, a receiver FFT-window can be determined by the boundaries of a received line-of-sight (LOS) built symbol. By applying to the LOS received built symbol the inverse temporal-diversity arithmetic operations that has been applied at the transmitter, exactly the same time-domain samples of the original OFDM symbol are regenerated.

The same arithmetic operations applied to a non line-of-sight (NLOS) received built symbol allow to provide time-delayed samples of the original OFDM symbol. Any other received NLOS built symbols processed with the inverse temporal-diversity arithmetic operations generate the samples of a delayed original OFDM symbol, provided that the zero-padded guard interval verify Eq.(24).

Therefore, prepending a zero-padded guard interval to the built symbol allows the receiver to generate samples that are identical to the samples that would have been generated by the ADC(s) of a conventional OFDM receiver. Hence, the received built symbols according to the present invention can be demodulated by utilizing a conventional OFDM receiver with a single-tap complex multiplier frequency domain equalizer, whether the signals are transmitted in LOS or multipath (LOS + L-NLOS) propagation channel.

Similar to the transmitter, compared with the computations performed by a conventional OFDM system without applying the method of the present invention to reduce the PAPR, the additional computations are negligible while maintaining the system performance and can be implemented by software using a very low-power and very low-cost DSP processor core.

It is clear that the method of the invention is applicable for any larger number $M = 2^p$ of sub-symbols to further reduce the PAPR of the original OFDM symbol, wherein p is a positive integer.

The method of the invention for processing the original OFDM symbol carried by N tones for data transmission comprising partitioning the N tones into M disjoint tone sub-sets, each of the M disjoint tone sub-sets comprising N/M tones and can be expressed as:

- Subset #0: $\{k_{\#0}\} = 2^p m$
- Subset #1: $\{k_{\#1}\} = 2^p m + 1$
- Subset #2: $\{k_{\#2}\} = 2^p m + 2$

  ...
- Subset #$(2^p - 1)$: $\{k_{\#(2^p{}_{-1})}\} = 2^p m + (2^p - 1)$

wherein $m \in \mathbb{N}^{\cdot +}$ ($m = 0,1,2, ...$).

The M disjoint candidate sub-symbol sets repectively comprising M sub-symbols respectively lasting for a duration $T_s/M$ and carried by the N/M tones of the corresponding tone sub-set $\{k_{\#q}\}$ can be generated in the above-mentioned way by which the 4 disjoint candidate sub-symbol sets repectively comprising 4 sub-symbols are generated according to the second embodiment.

A $(u+1)^{th}$ sub-symbol (time-multiplexed section) of a $q^{th}$ tone sub-set carried by the N/M tones of the $q^{th}$ tone sub-set $\{k_{\#q}\}$ can be thus expressed as $s_{k\#q}\left(u\frac{N}{M} + n'\right)$, wherein $u = 0,1, ... , (M-1)$, $and$ $n' = 0,1, ... , \left(\frac{N}{M} - 1\right)$.

As a reminder, the data contained in the original OFDM symbol can be partitioned into M different portions by performing the method of the invention because the original OFDM symbol is time-multiplexed. Thus, the value "$u$" indicates its corresponding portion of the data contained in the original OFDM symbol.

For generating the built symbol, only one candidate sub-symbol from each of the M candidate sub-symbol sets is selected. Each selected sub-symbol lasts for a duration $T_S/M$ and carried by the N/M tones of the corresponding tone sub-set.

All of the M candidate sub-symbol sets participate the composition of the built symbol, and there is no candidate sub-symbol set providing more than one sub-symbol for generating the built symbol. In addition, while selecting from each of the candidate symbol sets a sub-symbol $s_{\{k_{\#q}\}}\left(u\frac{N}{M} + n'\right)$, each of the M selected sub-symbols has a different value of $u$ since the M selected sub-symbols contain respectively disjoint portions of the data contained in the original OFDM symbol.

Hence, as indicated in the above Eq.(23), there are M! different combinations of time-multiplexed sections (sub-symbols) to form the built symbol for transmission.

The PAPR value during the transmission of the built symbol is thus reduced since now only $N/M$ tones, instead of N tones, are used per selected sub-symbol to generate the built symbol for transmission. In addition, the built symbol has still the duration $T_s$ and is still carried by N tones, and is thus capable of being received and demodulated by a conventional OFDM receiver.

It should be noted that the zero-padded guard interval does not affect the PAPR value nor its related value of complementary cumulative distribution function CCDF(PAPR). A multi-carrier system, like a conventional OFDM system, is actually specified using the statistics of the PAPR value. This is because the highest PAPR value of the multicarrier signal results from inputs data causing all of the N modulated tones to be added constructively. Such worst case occurs in fact very rarely so that the upper bound of the PAPR value may not be meaningful for system specifications.

A commonly used reference for system specifications is the complementary cumulative distribution function (CCDF) defined as the probability that PAPR exceeds a specified value; i.e. CCDF(PAPR) = Prob{PAPR > PAPR$_{specified}$}.

It is also noteworthy that, in some embodiements of the invention, the guard interval which extends the duration of the built symbol may result in slightly reducing the overall system capacity (which also exists for a conventional OFDM system). Nevertheless, the utilization of a zero-padded guard interval provides the simplest means for the receiver to utilize a frequency-domain equalization (FEQ) allowing the use of a single complex-tap per tone.

The slight decrease of system capacity due to the insertion of the guard interval can be retrieved back due to to a significant reduction of the CCDF(PAPR) value of the built symbol, which leads to a much less Input-Back-Off (IBO) value of a power amplifier of the transmitter. The reduction of the IBO value provides larger gain and efficiency of the power amplifier. The transmitted signal power can be thus slightly increased to increase a corresponding received Signal-to-Noise Ratio (SNR), and thus increase the modulation rank for some tones resulting in increased system capacity. Therefore, some trade-off compromises between an allowed power consumption and a desired system capacity should be taken into account.

The invention is neither limited to the generation of the zero-padded guard interval; other guard interval generation methods can be applied without departing from the scope of the present invention.

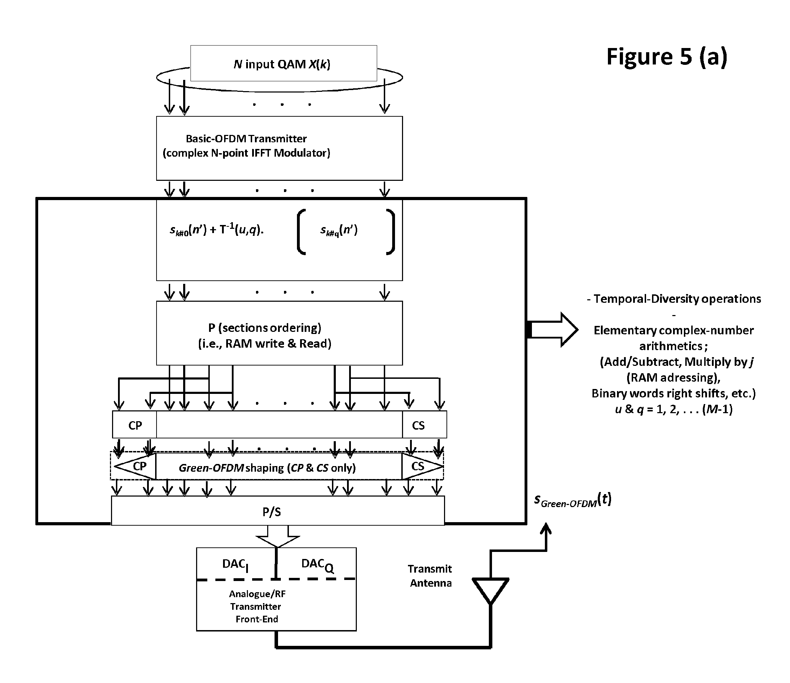

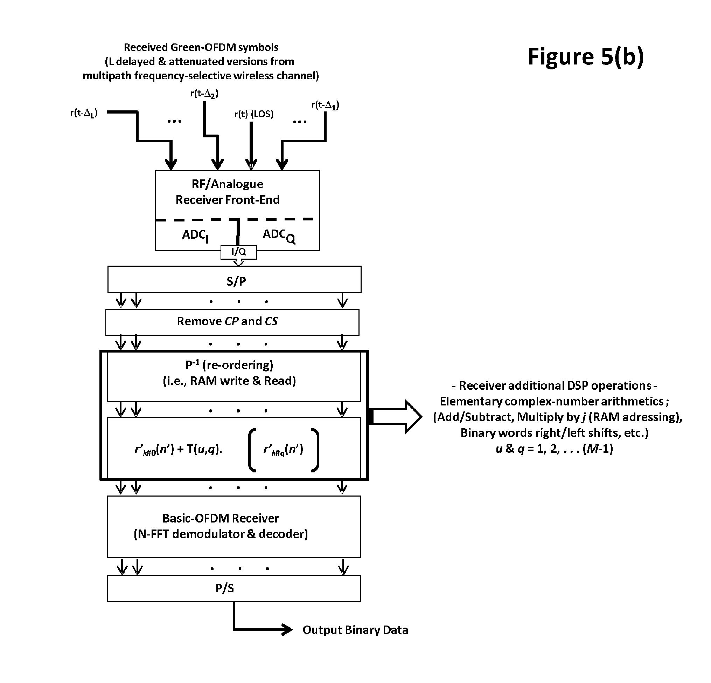

Figures 5(a) and 5(b) respectively illustrates an example of the transmitter and the receiver utilized in the above-mentioned embodiments. Other implementations and/or structures of the transmitter and/or receiver compatible with the method of the invention can be applied without departing from the scope of the present invention.

The transmitter according to the invention comprises at least one processor programmed to perform the method for generating a built symbol described as above.

The built symbol is then transmitted to a receiver to be demodulated. According to the invention, the built symbol can be demodulated in at least two ways.

In the above-mentioned embodiment illustrating the step of prepending the zero-padded guard interval to the built symbol according to the invention, the receiver can be implemented with using a conventional OFDM receiver comprising for example a conventional complex N-point FFT demodulator.

According to the invention, the received built symbol received can be also demodulated by performing a method for demodulating a built symbol "sub-symbol by sub-symbol" (or "section by section"), in order to benefit from the structure of the built symbol and make high throughput communication systems much more robust against Doppler spread.

Indeed, the performance degradation of OFDM systems due to Doppler spreads is directly dependent to the tone spacing. The larger is the tone spacing, the less is the OFDM system degraded by Doppler spreads. Since the built symbol is time-multiplexed of the M OFDM sub-symbols with M times larger tone spacing as compared with that of the original OFDM symbol, the system is de-facto M times more robust against Doppler shifts. To benefit from this property, the associated receiver maintains preferably this large tone spacing while demodulating the sub-symbols of the built symbol. The method for demodulating scheme is described here below.

The first sub-symbol $s_{k\#q}(n')$ is not affected by a previous received built symbol because an ISI noise is absorbed by the $\mu$ samples of the guard interval of the built symbol which will be removed at the receiver and thus there is no inter-carrier interference (ICI) noise, either. However, the tone spectrum of each sub-symbol is widened and so the tone sub-set $\{k_{\#q}\}$ is not orthogonal with the tone sub-set $\{k_{\#q'}\}$.

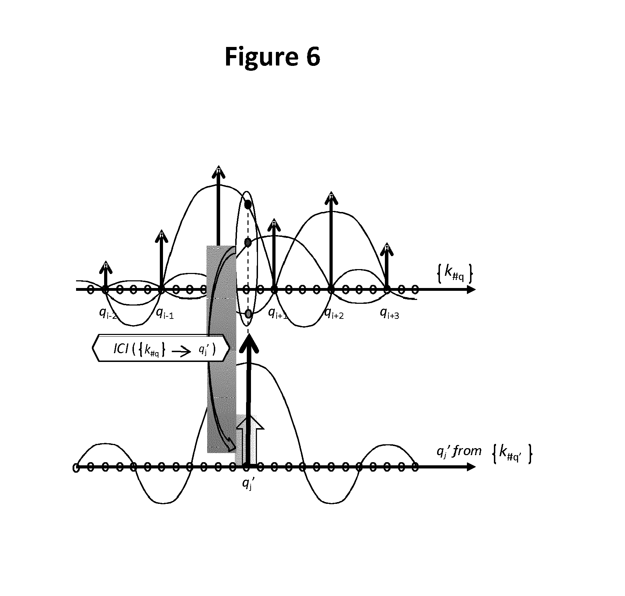

The spectrum of a sub-symbol $S_{k\#q}\left(u\frac{N}{M}+n'\right)$ will affect tones $k' \in \{k_{\#q'}\}$ utilized by a following adjacent time-multiplexed sub-symbol $S_{k\#q'}\left((u+1)\frac{N}{M}+n'\right)$. One of the specific cases of the ICI noise from the sub-symbol $S_{k\#q}\left(u\frac{N}{M}+n'\right)$ to the j$^{th}$ tone $q'_i$ of the sub-symbol $S_{k\#q'}\left((u+1)\frac{N}{M}+n'\right)$ is illustrated in Figure 6 (wherein only the ICI noise on the j$^{th}$ tone $q'_j \in \{k_{\#q'}\}$ is shown).

The ICI noise from the tone sub-set $\{k_{\#q}\}$ of sub-symbol $S_{k\#q}\left(u\frac{N}{M}+n'\right)$ on the j$^{th}$ tone $q'_j \in \{k_{\#q'}\}$ to the following adjacent time-multiplexed sub-symbol $S_{k\#q'}\left((u+1)\frac{N}{M}+n'\right)$, that we denote $ICI[\{k_{\#q}\} \to q'_j]$ is given by :

$$ICI\left[\{k_{\#q}\} \to q'_j\right] = \sum_{q\in\{k_{\#q}\}} X(q).sinc\left(q'_j - q\right) \qquad (25)$$

Eq.(25) can also be written in a matrix representation as indicated in the following Eq.(26) (wherein $\rho = \frac{N}{M}$):

$$[A].[B] = \begin{bmatrix} X(q_0) & X(q_1) & \ldots & X(q_{\rho-1}) \end{bmatrix}. \begin{bmatrix} sinc(q'_j - q_0) \\ sinc(q'_j - q_1) \\ \cdot \\ \cdot \\ \cdot \\ sinc(q'_j - q_{\rho-1}) \end{bmatrix} \quad (26)$$

In order to remove the above ICI noise, the method for demodulating a built symbol comprising thus an ICI cancellation stage to perform an operation which is an inverse to the above ICI noise.

The inverse of the ICI noise from the tone sub-set $\{k_{\#q}\}$ of sub-symbol $s_{k\#q}\left(u\frac{N}{M} + n'\right)$ on the $j^{th}$ tone $q'_j \in$ $\{k_{\#q}\}$ to the following adjacent time-multiplexed sub-symbol $s_{k\#q'}\left((u+1)\frac{N}{M} + n'\right)$ is calculated by utilizing the well-known theorem of matrix theory $([A].[B])^{-1} = [B]^{-1}.[A]^{-1}$), therefore the inverse of $ICI[\{k_{\#q}\} \to q'_j]$ can be obtained as:

$$ICI^{-1}\left[\{k_{\#q}\} \to q'_j\right] = [B]^{-1}.[A]^{-1} \quad (27)$$

$$= \begin{bmatrix} sinc^{-1}(q'_j - q_0) & sinc^{-1}(q'_j - q_1) & \ldots & sinc^{-1}(q'_{\rho-1}) \end{bmatrix}. \begin{bmatrix} X(q_0) \\ X(q_1) \\ \ldots \\ X(q_{\rho-1}) \end{bmatrix} \quad (28)$$

For all tones $q'_j$ *belonging to the tone subset* $\{k_{\#q}\}$ *(j = 0,1, ..., ($\rho$ - 1)), we have :*

$$ICI^{-1}\left[\{k_{\#q}\} \to \{k_{\#q'}\}\right] = \left[sinc^{-1}(q'_j - q_i)\right].[X(q_i)] \quad (29)$$

$$\left[sinc^{-1}(q'_j - q_i)\right]$$
$$= \begin{bmatrix} sinc^{-1}(q'_0 - q_0) & sinc^{-1}(q'_0 - q_1) & \ldots & sinc^{-1}(q'_0 - q_{\rho-1}) \\ sinc^{-1}(q'_1 - q_0) & sinc^{-1}(q'_1 - q_1) & \ldots & sinc^{-1}(q'_1 - q_{\rho-1}) \\ \cdot & & & \cdot \\ \cdot & \vdots & \vdots & \vdots \\ sinc^{-1}(q'_{\rho-1} - q_0) & sinc^{-1}(q'_{\rho-1} - q_1) & \ldots & sinc^{-1}(q'_{\rho-1} - q_{\rho-1}) \end{bmatrix}$$

In a preferred embodiment, the ICI cancellation stage comprising not only performing, but also computing and storing beforehand the above matrix [$sinc^{-1}(q'_j$ - $q_i$)] off-line. Said matrix can be stored in a memory, for example in a ROM memory) within a transceiver integrated circuit.

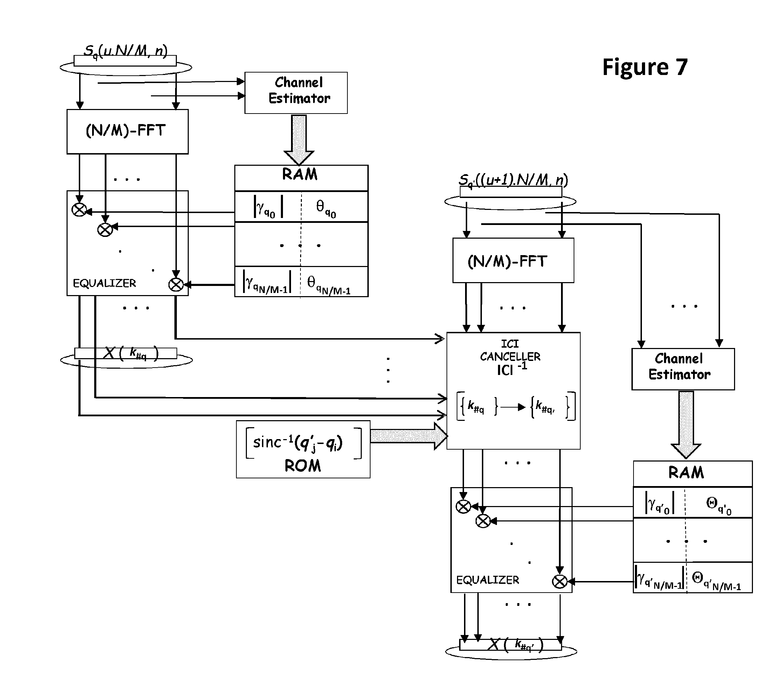

A demodulation process for the first two sub-symbols of the built symbol (for large Doppler spread channels) is illustrated in Figure 7.

The first sub-symbol $s_{k\#q}(n')$, can be processed alone by an $\frac{N}{M} - FFT$, and the 1-tap complex coefficient equalizer to output the $X(k_{\#q})$ because there is no ISI noise from the previous received built symbol nor ICI noise. The complex coefficients of the equalizer are the frequency-domain representation of the multipath channel transfer function for the tones of the tone sub-set $\{k_{\#q}\}$ of the first sub-symbol $s_{k\#q}(n')$. Examples of complex equalizer coefficients are:

(a) Zero-Forcing (ZF) :

$$FEQ_1 = \frac{\mathcal{H}^*(q)}{|\mathcal{H}(q)|^2} \quad \forall\, q \in \{k_{\#q}\} \qquad (30.a)$$

(b) Minimum Mean Square Error (MMSE) :

$$FEQ_2 = \frac{\mathcal{H}^*(q)}{|\mathcal{H}(q)|^2 + \sigma_n^2} \quad \forall\, q \in \{k_{\#q}\} \quad (30.b)$$

The invention is not limited to the above channel equalizer algorithms (such as those indicated in Eqs.(30)). Other channel equalizer algorithms can be performed without departing from the scope of the present invention.

This demodulation process is preferably performed in a cascaded way until all time-multiplexed sub-symbols of the built symbol are processed by their dedicated $\frac{N}{M} - FFT$, and the ICI cancellation stage performed to remove the ICI noise from the previous sub-symbol is thus finally equalized by its 1-Tap complex multiplication of the associated equalizer.

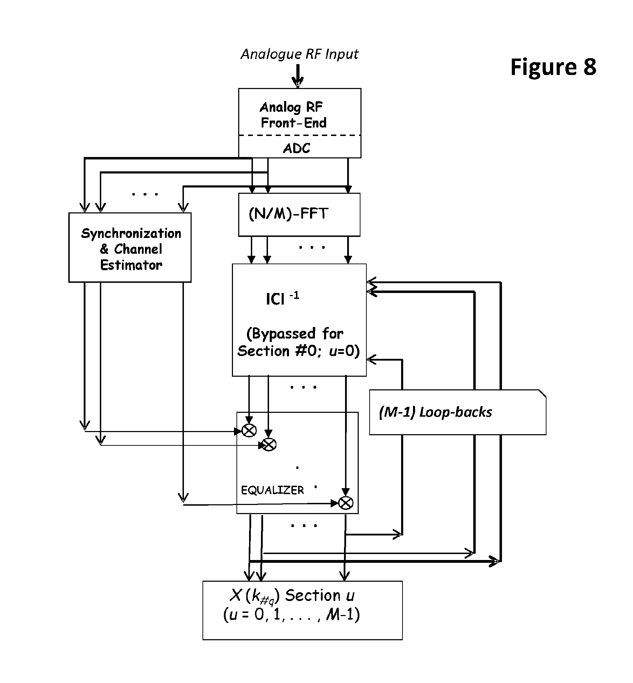

Furthermore, instead of implementing the receiver demodulator utilizing $M$ parallel $\frac{N}{M} - FFT$, the demodulation of all of the sub-symbols of the built symbol can be performed with using a single $\frac{N}{M} - FFT$ in a loop-back configuration as represented in Figure 8. Figure 8 illustrates a ($M$-1) times loop-back receiver architecture in high Doppler spread channels using a single $\frac{N}{M} - FFT$.

It should be noted that since according to the demodulating method uitilized in the present embodiment, the built symbol is processed sub-symbol by sub-symbol (in other words, the sub-symbols of the built symbol are processed in a cascade way), an error or more that may occur for any sub-symbol demodulation is repercuted in the ICI cancellation stages performed on the succeeding sub-symbols, which may result in an unacceptable degradation of the BER.

There are several means to avoid this degrading effect:

(a) Utilizing a Forward Error Correction (FEC) decoding after each sub-symbol demodulation before performing the ICI cancellation stage performed on the following received sub-symbols of the built symbol;
(b) Increasing the SNR margin by reducing the *PAPR* down to $PAPR_{F>>1}$ and slightly increase the $P_{out,avg}$ at the cost of a slight increase of the power consumption while still obtaining significant gains in overall energy efficiency;
(c) Applying a very large *PAPR* reduction and using it as a smart compromise by biasing the power amplifier of the transmitter in order to reduce the overall transceiver power consumption.
Increasing the capacity with the resulting larger SNR allows a larger QAM constellation per tone, while also increasing the SNR margin. Meanwhile, the FEC decoding per sub-symbol demodulation (the above case (a)) can also be implemented together as well without impact of digital implementation complexity compared with a conventional OFDM system.

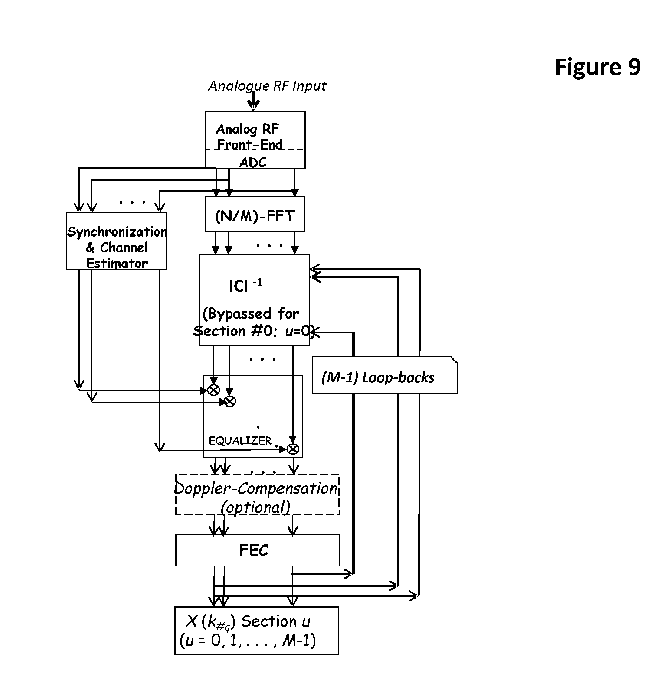

The implementation of the Doppler-compensation macroblock is no longer mandatory as the impact on the system performance due to the Doppler effect is directly related to the modulated tones spacing. Therefore, with the invention, the implementation of the Doppler-compensation macroblock is optional even for very high speed mobile devices as its needed implementation is illustrated by the relationship of the system specifications and $M = 2^p$ which defines the modulated tones spacing. In case of extremely large Doppler shifts, an appropriate existing Doppler-compensation method can be performed by the receiver according to the invention, as shown in Figure 9. Figure 9 illustrates a receiver macroblock architecture comprising the optional Doppler-compensation macroblock with the loop-back configuration according to an embodiment of the invention. The receiver macroblock architecture is utilized for example in a case of extremely large Doppler spread channels.

As mentioned above, there is no need to perform the ICI cancellation stage for the demodulation of the first sub-symbol of the built symbol, the ICI cancellation stage of the method for demodulating preferably performed on each of the (M-1) sub-symbols (from the 2nd to the $M^{th}$ sub-symbol) comprises performing $\left(\frac{N}{M} - 1\right)^2$ multiply-accumulates (MACs) operations.

Since there are $M$ sub-symbols to be demodulated in order to demodulate all of the $N$ tones of the built symbol, a total computational complexity of the ICI cancellation stage repeatedly performed is given by:

$$M \cdot \frac{MACS}{stage} \cong \frac{N^2}{M} \Rightarrow \mathcal{O}(N^2) \qquad (31)$$

wherein $O(x^2)$ means « *on the order of $x^2$* ».

Eq.(31) indicates that, compared with the FFT computations performed by the receiver, the ICI cancellation stages performed in a cascaded way make the most computational complexity. However, the arithmetic computations of the ICI cancellation stages can be significantly reduced by condidering the decay of the sinc-function sidelobes which are reduced by 6dB per octave.

For instance, by fixing the ICI-cancellation to $\pm$ 32 sidelobes from each disturbing tones of the previous section, we have [(-6*dB* $\times$ 5) + 3*dB*] = -27*dB* remaining ICI noise, that is about 0.2%; actually, it is even less than 0.2% because the successive sidelobes of the sine-function alternate in positive/negative sign. For example, the first sidelobe has a negative sign, the second sidelobe has a positive sign, and so forth.

The ICI noise at the receiver can further be reduced to its strict minimum by an appropriate existing « Pulse-Shaping » method performed by the transmitter according to the invention, such as Rectangular pulse (REC), Raised Cosine pulse (RC), Better than Raised Cosine pulse (BTRC), Sinc Power Pulse, and Improved Sinc Power pulse (ISP), etc.

$$P_{REC}(f) = sinc(fT_S) \qquad (32.a)$$

$$P_{RC}(f) = sinc(fT_S).\frac{cos(\pi\alpha fT_S)}{1-(2\alpha fT_S)^2} \qquad (32.b)$$

$$P_{BTRC}(f) = sinc(fT_S).\frac{[2\beta fT_S.sin(\mu\alpha fT_S)+2cos(\pi\alpha fT_S)-1]}{1+(\beta fT_S)^2} \qquad (32.c)$$

$$P_{SP}(f) = sinc^n(fT_S) \qquad (32.d)$$

$$P_{ISP}(f) = exp\{-a(fT_S)^2\}.sinc^n(fT_S) \qquad (32.e)$$

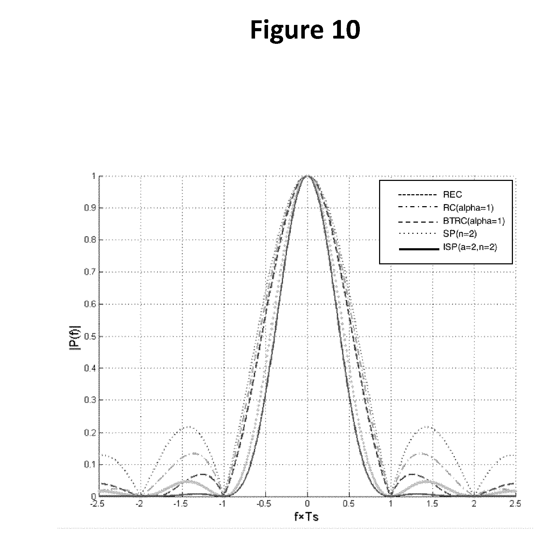

wherein $\alpha$ ($0 \le \alpha \le 1$) is the rolloff factor, $\beta = \pi\alpha$/ln2, $a$ is a design parameter utilized to adjust the amplitude and $n$ is the degree of the *sinc* function. Figure 10 presents a comparison of the above-mentioned REC, RC, BTRC, SP, and ISP spectrum.

All of the above-mentioned pulse-shaping functions maintain orthogonality among the N tones. Figure 10 illustrates that the Improved Sinc Power pulse (ISP) function has the lowest spectral sidelobes and that nearly 100% of the power is contained in the main central lobe. This property of the ISP windowing spectrum can be benificially exploited within the ICI-cancellation stage macroblock according to the invention since only the disturbing mainlobes of the tones of the previous section need to be removed.

Given the definition of the tone sub-set for each of the M sub-symbols of the built symbol, this requires only two multiplications followed by one add and one substract for each tone of the tone sub-set per sub-symbol. Thus, in an OFDM system using $N$ tones and $M$ sub-symbols, $\approx 2N$ MACs per built symbol are required to be performed. In an example of a built symbol carried by 32K-tones DVB-T2, only 64 kMACs per built symbol, and thus only $\lesssim 0.05$ GFLOPS of additional computations, which can be considered as insignificant.

It is notheworthy that well-specified dedicated design, whether in hardware, in software, or in a mix of hardware and sofware, can make this second receiver architecture backward-compatible with a conventional OFDM receiver.

The receiver according to the invention comprises at least one processor programmed to perform the method for demodulating a built symbol generated by performing the method for generating a built symbol.

The following list is provided for ease of the comprehension of the method according to the invention, especially concerning at least parts of the steps of the invention:

the transmitter:

- Exhaustive Exploration and exploitation of the « Temporal-Diversity » properties of the original OFDM symbol of the OFDM signal to generate M time-multiplexed OFDM sub-symbols, with $N/M$ data-modulated tones per section, from a single conventional OFDM modulator;
- Each time-multiplexed section is carried by distinct $N/M$ preferably equidistant data-modulated tones with $\Delta f = M/T_S$, where $T_S$ is the duration of the original OFDM symbol;
- The temporal-diversity properties of the original OFDM symbols provide a partitioning of the $N$ tones of the original OFDM symbol into $M = 2^p$ disjoint tone sub-sets ($p$ being an integer $\geq 1$);
- The $M$ sections (sub-symbol) are time-multiplexed without a guard interval in between to generate the built symbol (notice that since each sub-symbol uses distinct tone sub-set with a tone spacing of $M/T_S$, the duration of each sub-symbol is $T_S/M$ and thus the duration of the built symbol is equal to the duration of the original OFDM symbol);
- Prepending a zero-padded guard interval according to the above-mentioned method compliant with the built symbol.

At the receiver:

- Applying the inverse « Temporal-Diversity » properties of the transmitter to the output samples of the ADC(s) in order to generate input time samples equal to the received input samples of a conventional OFDM complex $N$-point FFT demodulator;
- The execution of the steps of the method can be switched off to make the transceiver backward-compatible with a conventional OFDM transceiver;
- Another receiver architecture consisting of a demodulation performed in a cascaded way and decoding using $N/M$-point FFTs is applicable. This receiver architecture alternatively exploits the built symbol structure to make high throughput communication systems with an improved Doppler spread robustness.

In summury, with a holistic view-point, the transmitter (which is for example located in a base station) and the receiver (which is for example in a remote fixed or mobile device) utilizing the method of the invention has a very low implementation complexity (digital and analogue), and an unprecedent overall ultra-low power comsumption compared with a conventional OFDM system without any *PAPR* reduction technique applied.

Moreover, when compared with existing methods utilised for reducing the PAPR value of an OFDM signal, the present invention provides the following technical advantages:

- Ultra-low and pre-determined PAPR and CCDF(PAPR) without any iteration,
- Unsignificant digital implementational complexity that can readily be implemented in DSP-software on top of conventional OFDM transceivers (i.e., transmitter and receiver),
- Ultra-low power transmitter analogue front-end (DAC(s) & HPA), and a consequently ultra low-cost OFDM transceiver,
- No in-band distortion, hence no BER degradation,
- No power leakage, hence fully compliant with legacy systems in use,
- No side information required, hence no loss of capacity,
- No handshakes required between the transmitter and the receiver,
- No Bandwidth expansion,
- No increase of transmit power,
- The method for generating a built symbol and/or the method for demodulating excuted in the transmit-receive transceiver can be switched-off, so that the system is able to be fully backward compatible with conventional-OFDM mode of operation,
- Compromise on the resulting reduction of power consumption by allowing slightly less reduction of power consumption and increase the SNR per tone resulting either in:

    ○ (i) increase in transmission throughput (i.e., increase the transmission capacity), or

○ (ii) increase the SNR margin, or
○ (iii) do not apply the ICI cancellation stage at the cost of reduced performance while still providing an unprecedented very low-power comsumption at OFDM transceivers according to the invention and keeping all the benefits of the OFDM technology.

As mentioned above, the receiver can be implemented in a different way than reversal of temporal-diversity used in the transmitter. This alternative receiver exploits the intrinsic improved robustness against Doppler spreads due to the $M$ times larger tone spacing of each of the $M$ time-multiplexed Sections that form the built symbols by temporal-diversity at the transmitter. With this alternative receiver implementation, that can be also made backward-compatible with conventional-OFDM if the associated DSP operations are switched-OFF at both transmitter and receiver.

## Claims

1.  A method for generating a built symbol for transmission comprising data of an original symbol of an orthogonal multi-carrier modulation signal in order to reduce the peak-to-average power ratio (PAPR) of the orthogonal multi-carrier modulation signal, the original symbol lasting for a duration $T_S$ and carried by N tones; the method comprising:

    - partitioning the N tones into M tone sub-sets respectively comprising N/M tones;
    - for each of the M tone sub-sets, generating by the intrinsic temporal-diversity property of Fast Fourier Transform a corresponding candidate sub-symbol set comprising M sub-symbols, each sub-symbol lasting for a duration $T_S/M$ and carried by the N/M tones of the corresponding tone sub-sets;
    - selecting from each of the M candidate sub-symbol sets a sub-symbol, wherein any two of the selected sub-symbols contain two different data;
    - generating the built symbol for transmission comprising the M selected sub-symbols so that the built symbol contains all the data of the original symbol.

2.  The method of claim 1 wherein the original symbol and the M selected sub-symbols are time-multiplexed.

3.  The method of any one of the preceding claims, wherein the built symbol is prepended with a zero-padded guard interval lasting at least the maximum delay spread of a multipath propagation channel.

4.  The method of any one of the preceding claims wherein the orthogonal multi-carrier modulation signal is an orthogonal frequency-division multiplexing (OFDM) signal.

5.  The method of any one of the preceding claims, wherein there are M! permutations during the step of selecting from the M candidate sub-symbol sets a sub-symbol.

6.  A transmitter configured to perform the method of any one of the preceding claims.

7.  A method for demodulating a built symbol generated according to the method of any one of the preceding claims 1 to 5, comprising:

    - performing an inverse of transmitter's temporal-diversity arithmetic processing applied to symbol samples of the built symbol received by a receiver to regenerate samples identical to symbol samples generated by a conventional orthogonal multi-carrier receiver.

8.  A method for demodulating a built symbol generated according to the method of any one of the preceding claims 1 to 6, comprising:

    - demodulating each time one of M selected sub-symbols of the built symbol.

9.  The method of the preceding claim, comprising an inter carrier interference (ICI) cancellation stage utilized for removing an ICI noise between any two adjacent sub-symbols of the built symbol, the two adjacent sub-symbols respectively carried by two distinct tone sub-sets TS-A and TS-B comprising respectively N/M tones; the ICI cancellation stage comprising:

    - calculating a sum of amplitudes of the tone sub-set TS-B (main lobes and side lobes) that overlap a tone of the tone sub-set TS-A,
- generating a result by subtract said sum that is the ICI noise on the said tone of the tone sub-set TS-A.

10. The method of the preceding claim wherein the result is calculated offline and stored in a memory before demodulating.

11. The method of any one of the preceding claims 8 to 10 wherein the M sub-symbols of the built symbol are demodulated sub-symbol by sub-symbol chronologically or in parallel.

12. The method of any one of the preceding claims 8 to 11, comprising:

- performing a pulse shaping process on each of the M sub-symbol of the built symbol in order to reduce computations occurred while performing the ICI cancellation stage.

13. A receiver configured to perform the method of any one of the preceding claims 8 to 12.

Figure 1

EP 2 843 894 A1

# Figure 2

EP 2 843 894 A1

(a)

| $S_{k\#0}(n')$ | $S_{k\#0}(n')$ | $S_{k\#0}(n')$ | $S_{k\#0}(n')$ |

0      N/4      N/2      3.N/4      N-1

(b)

| $s_{k\#1}(n')$ | $+j\, s_{k\#1}(n')$ | $-\, s_{k\#1}(n')$ | $-j\, s_{k\#1}(n')$ |

0      N/4      N/2      3.N/4      N-1

(c)

| $s_{k\#2}(n')$ | $-\, s_{k\#2}(n')$ | $s_{k\#2}(n')$ | $-\, s_{k\#2}(n')$ |

0      N/4      N/2      3.N/4      N-1

(d)

| $s_{k\#3}(n')$ | $-j\, s_{k\#3}(n')$ | $-\, s_{k\#3}(n')$ | $+j\, s_{k\#3}(n')$ |

0      N/4      N/2      3.N/4      N-1

Figure 3

# Figure 4

= Samples of two received conventional OFDM symbols: (1 x LOS + 1 x NLOS).

(n = 0, 1, . . . , (N-1)

EP 2 843 894 A1

## Figure 5 (a)

N input QAM $X(k)$

Basic-OFDM Transmitter
(complex N-point IFFT Modulator)

$s_{k\#0}(n') + T^{-1}(u,q).$ $\begin{bmatrix} & s_{k\#q}(n') \end{bmatrix}$

P (sections ordering)
(i.e., RAM write & Read)

CP          CS

CP   *Green-OFDM* shaping (*CP* & *CS* only)   CS

P/S

$s_{Green-OFDM}(t)$

- Temporal-Diversity operations
-
Elementary complex-number
arithmetics;
(Add/Subtract, Multiply by *j*
(RAM adressing),
Binary words right shifts, etc.)
$u$ & $q$ = 1, 2, . . . ($M$-1)

DAC$_I$   DAC$_Q$

Analogue/RF
Transmitter
Front-End

Transmit
Antenna

**Figure 5(b)**

**Received Green-OFDM symbols**
**(L delayed & attenuated versions from**
**multipath frequency-selective wireless channel)**

$r(t-\Delta_L)$   $r(t-\Delta_2)$   $r(t)$ (LOS)   $r(t-\Delta_1)$

...   ...

**RF/Analogue**
**Receiver Front-End**

$ADC_I$   $ADC_Q$

I/Q

**S/P**

• • •

**Remove *CP* and *CS***

• • •

**P$^{-1}$ (re-ordering)**
**(i.e., RAM write & Read)**

• • •

$r'_{k\#0}(n') + T(u,q).$   $\begin{bmatrix} r'_{k\#q}(n') \end{bmatrix}$

- Receiver additional DSP operations -
Elementary complex-number arithmetics ;
(Add/Subtract, Multiply by $j$ (RAM adressing),
Binary words right/left shifts, etc.)
$u$ & $q$ = 1, 2, . . . ($M$-1)

• • •

**Basic-OFDM Receiver**
**(N-FFT demodulator & decoder)**

• • •

**P/S**

**Output Binary Data**

EP 2 843 894 A1

Figure 6

EP 2 843 894 A1

Figure 7

**Figure 8**

Analogue RF Input

Analog RF Front-End / ADC

(N/M)-FFT

ICI $^{-1}$ (Bypassed for Section #0; u=0)

Synchronization & Channel Estimator

EQUALIZER

(M-1) Loop-backs

$X(k_{\#q})$ Section u ($u = 0, 1, \ldots, M-1$)

**Figure 9**

**Figure 10**

## EUROPEAN SEARCH REPORT

Application Number

EP 13 18 2699

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUH-REN TSAI ET AL: "A low-complexity SLM approach based on time-domain sub-block conversion matrices for OFDM PAPR reduction", COMPUTERS AND COMMUNICATIONS (ISCC), 2011 IEEE SYMPOSIUM ON, IEEE, 28 June 2011 (2011-06-28), pages 579-584, XP032018454, DOI: 10.1109/ISCC.2011.5983900 ISBN: 978-1-4577-0680-6 * page 581, left-hand column, paragraph III.A * * figure 3 * | 1-13 | INV. H04L27/26 |
| | ----- | | |

TECHNICAL FIELDS
SEARCHED (IPC)

H04L

The present search report has been drawn up for all claims

| Place of search | Date of completion of the search | Examiner |
|---|---|---|
| Berlin | 27 January 2014 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)